# EUROPÄISCHE PATENTSCHRIFT

(11) **EP 0 563 027 B1**
(45) Veröffentlichungstag und Bekanntmachung des Hinweises auf die Patenterteilung: **15.11.1995**
(21) Anmeldenummer: 93890044.6
(22) Anmeldetag: 16.03.1993
(51) Int. Cl.: B01D 61/08, C02F 1/44

(54) **Wasseraufbereitungsgerät**
Water treatment apparatus
Dispositif pour le traitement de l'eau

(30) Priorität: 27.03.1992 AT 627/92
(43) Veröffentlichungstag der Anmeldung: 29.09.1993
(73) Patentinhaber: Hochgatterer, Josef, A-4360 Grein (AT)
(72) Erfinder: Hochgatterer, Josef, A-4360 Grein (AT)
(74) Vertreter: Hübscher, Heiner, Dipl.-Ing.

(56) Entgegenhaltungen:
- DE-A- 3 914 940
- US-A- 3 887 463
- US-A- 4 502 953

## Beschreibung

Die Erfindung bezieht sich auf ein Wasseraufbereitungsgerät mit einem eingangsseitig über ein Vorfilter an eine Wasserleitung anschließbaren Membranfilter zur Wasserbehandlung durch Umkehr-Osmose, welches Membranfliter ausgangsseitig neben einer Abwasserleitung eine Reinwasserleitung aufweist, die in einen mit einem Trinkwasserspender leitungsverbundenen Trinkwassertank mündet, wobei ein membranloser, mit einer Einrichtung zur Luftbeaufschlagung ausgestatteter Behälter den Trinkwassertank bildet, von dem eine zum Trinkwasserspender führende Steigleitung ausgeht.

Bedingt durch die steigende Grundwasserverschmutzung sind viele Wasserwerke nicht mehr in der Lage, Wasser mit echter Trinkwasserqualität zu liefern, und die gesetzlich festgelegten Grenzwerte für die im Wasser enthaltenen Schadstoffe u.dgl. lassen sich kaum mehr einhalten, so daß Leitungswasser die Gesundheit gefährden kann. Wasseraufbereitungsgeräte, die meist als Untertisch-Geräte ausgebildet sind, sollen Leitungswasser reinigen und gesundes Trinkwasser aufbereiten, wozu sich Membranfilter zur Umkehr-Osmose bereits bestens bewahrt haben. Umkehr-Osmose ist eine natürliche Wasserbehandlungsart, ohne das Wasser zu erhitzen oder chemisch zu verändern, bei der Wasser unter Leitungsdruck gegen eine halbdurchlässige Membran gedrückt wird. Diese Membrane ist mit mikroskopisch kleinen Poren versehen, die eine molekulare Trennung der Wassermoleküle von den Schadstoffmolekülen mit sich bringen. Die Wassermoleküle können nämlich die Membran durchströmen, die größeren Schadstoffmoleküle hingegen werden von den Poren abgewiesen und weggespült. So verläßt das Membranfilter sauberes, gesundes Wasser als Permeat und fließt in einen Trinkwassertank und das schadstoffangereicherte Abwasser wird als Konzentrat durch die Abwasserleitung abgeführt. Bisher sind nun die meisten Wasseraufbereitungsgeräte mit einem Membrandruckspeicher als Trinkwassertank ausgerüstet, bei dem die im Speicher eingesetzte Gummimembran für den zur Trinkwasserentnahme erforderlichen Wasserdruck sorgt. Allerdings führt diese Gummimembran zu einem schlechten Geschmack des Wassers, so daß dem Tank ein Kohlefilter nachgeschaltet werden muß, wodurch sich der Aufwand des Gerätes vergrößert. Abgesehen davon, sind aber die Gummimembran und vor allem auch das Kohlefilter Bakterienherde, die unweigerlich zu einer Verkeimung des Wassers führen. Diese Gefahr wird außerdem dadurch erhöht, daß sich der deckellose Membrandruckspeicher und auch die Gummimembran praktisch nicht reinigen lassen und das Ansetzen von Bakterien u. dgl. auf Dauer nicht zu verhindern ist. Ein weiterer Nachteil der bekannten Membrandruckspeicher ergibt sich daraus, daß sie im Membranfilter einen beträchtlichen Gegendruck bewirken, der die Schadstoffabweisung bei der Umkehr-Osmose beeinträchtigt.

Gemäß der US-PS 4 502 953 wurde auch schon ein Aufbereitungsgerät mit einem membranlosen Behälter als Trinkwassertank vorgeschlagen, wobei eine Luftbeaufschlagungseinrichtung und eine Steigleitung eine Wasserentnahme ermöglichen. Dazu wird oberhalb des Wassers über ein Einführventil ein bleibender Druckluftpolster aufgebaut, der dann bedarfsweise Wasser durch die Steigleitung zum Trinkwasserspender drückt, doch muß mittels eines speziellen Kontrollventils ein Entweichen der Druckluft beim Entleeren des Behälters verhindert werden, was Funktionsstörungen befürchten läßt. Außerdem führen die sich in Abhängigkeit vom Füllstand und der Temperatur ändernden Druckverhältnisse zu ungleichmäßigen Entnahmebedingungen, der Behälter muß ebenfalls als Druckbehälter hergestellt sein und der hohe Gegendruck beeinträchtigt auch hier die Umkehr-Osmosewirkung.

Der Erfindung liegt daher die Aufgabe zugrunde, diese Mängel zu beseitigen und ein Wasseraufbereitungsgerät der eingangs geschilderten Art zu schaffen, das auf rationelle Weise eine Verbesserung der Reinigungswirkung, eine Erhöhung der Funktionssicherheit und nicht zuletzt eine Steigerung der Wasserqualität mit sich bringt.

Die Erfindung löst diese Aufgabe dadurch, daß die Luftbeaufschlagungseinrichtung aus einer mittels des Abwassers der Abwasserleitung antreibbaren Pumpe besteht, an die eine zusätzlich zur Reinwasserleitung in den Behälter mündende Druckleitung angeschlossen ist. Ein solcher Behälter läßt sich als echter Niederdruckbehälter mit einem geeigneten Deckel zum Reinigen versehen und vermeidet dadurch die Gefahr einer Verkeimung bzw. Nitritbildung, was durch das Fehlen einer Gummimembrane unterstützt wird. Die Beaufschlagung des Tanks über die Pumpe mit Frischluft führt zu einer Sauerstoffanreicherung des Wassers und damit zu einer Steigerung der Wasserqualität. Ein geringer Überdruck von beispielsweise 0,5 bar genügt, um das Entnehmen des Wassers aus dem Tank durch den Trinkwasserspender zu ermöglichen, wobei die Pumpe zur Luftbeaufschlagung über das Abwasser der Abwasserleitung angetrieben wird und daher keiner Fremdenergie bedarf. Die Pumpe selbst kann an sich beliebig ausgestaltet sein. Es wäre möglich, diese Pumpe in Form einer schiebergesteuerten Kolbenmaschine ähnlich einer Dampfkolbenmaschine auszubilden, als Strömungsmaschine oder Zahnradpumpe u.dgl., um die kinetische Energie des Abwassers zum Antrieb der Luftpumpe nutzen zu können. Da auf Grund der Luftbeaufschlagung eine Gummimembran im Trinkwassertank unnötig ist, wird auch der Wassergeschmack nicht durch den Gummiwerkstoff beeinträchtigt und ein Aktivkohlefilter als Nachfilter kann vermieden werden, was zum Ausschalten eines weiteren Bakterienherdes führt. Der geringe Überdruck im Behälter gewährleistet im vorgeordneten Membranfilter eine große Druckdifferenz für die Umkehr-Osmose, so daß der durch den Leitungsdruck bedingte Arbeitsdruck von ca. 4 bar wirkungsvoll ausgenützt und die Schadstoffabweisung durch das Membranfilter wesentlich gesteigert wird.

Ist erfindungsgemäß die Pumpe in die über ein Luftansaugventil od. dgl. führende Reinwasserleitung eingebunden, wird neben der Frischluft auch das Reinwasser angesaugt, wodurch die Druckverhältnisse im Membranfilter begünstigt werden und der Überdruck der Wasserleitung optimal zur Umkehr-Osmose nutzbar ist. Durch die für Reinwasser und Luft gemeinsame Druckleitung von der Pumpe zum Tank wird außerdem der Bauaufwand weiter verringert.

Mündet die Druckleitung im Bodenbereich des Trinkwassertanks, wird die Sauerstoffanreicherung des Wasser durch die eingebrachte Luft verbessert und in günstiger Weise das Wasser bewegt.

Um die Druckverhältnisse im Trinkwassertank steuern zu können, weist der Trinkwassertank ein Überdruckventil auf und die Druckleitung ist innerhalb des Trinkwassertanks mit einem Schwimmerventil ausgestattet, so daß stets für einen gleichbleibenden Überdruck im Tank und damit auch für gleichbleibende Verhältnisse im Membranfilter gesorgt wird.

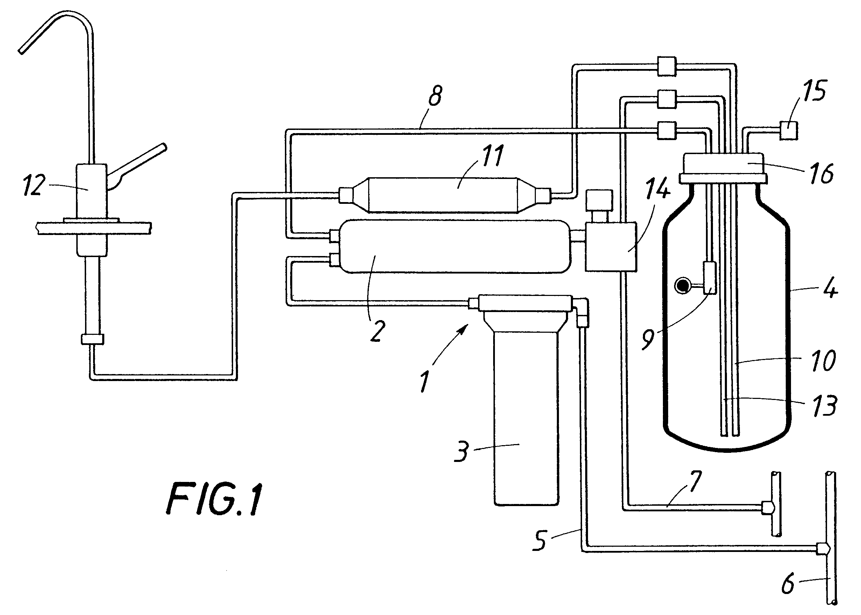

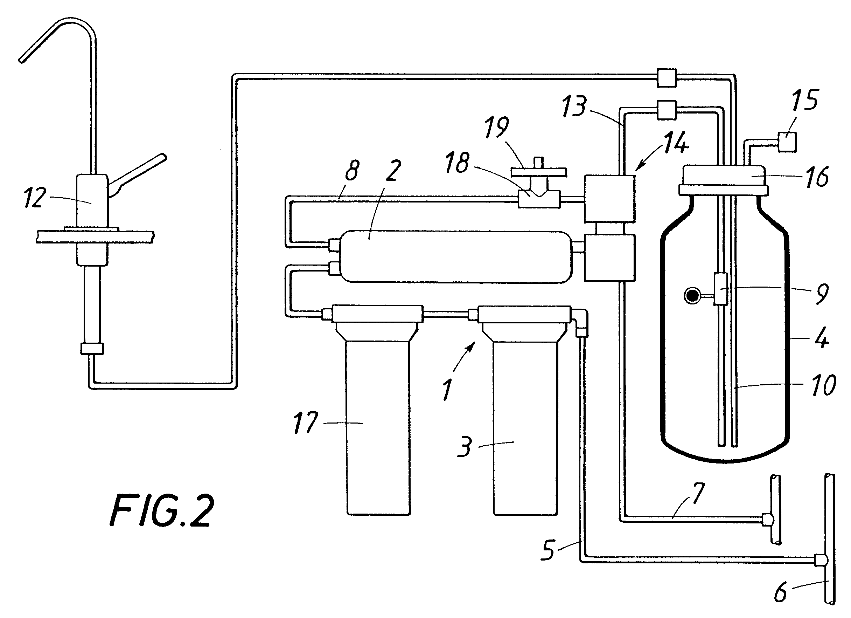

In der Zeichnung ist der Erfindungsgegenstand näher veranschaulicht, und zwar zeigen
- Fig. 1 und 2: zwei Ausführungsbeispiele eines erfindungsgemäßen Gerätes jeweils anhand eines Geräteschemas.

Das in Fig. 1 dargestellte Wasseraufbereitungsgerät 1 besteht im wesentlichen aus einem Membranfilter 2 zur Wasserbehandlung durch Umkehr- Osmose, einem dem Membranfilter 2 vorgeordneten Vorfilter 3 und einem nachgeordneten Trinkwassertank 4. Das Wasseraufbereitungsgerät 1 läßt sich über eine Zuleitung 5 an eine nur angedeutete Wasserleitung 6 anschließen, welche Zuleitung 5 über das Vorfilter 3 zum Membranfilter 2 führt. In diesem Membranfilter 2 kommt es auf Grund einer halbdurchlässigen Membran zu einem Abscheiden der Schadstoffe und das schadstoffangereicherte Abwasser wird über eine Abwasserleitung 7 abgezogen und kann eventuell für Spül- und Reinigungszwecke weiterverwendet werden. Das durch die Membran hindurchtretende reine, schadstofffreie Wasser fließt über eine Reinwasserleitung 8 in den Trinkwassertank 4, wobei ein Schwimmerventil 9 den Füllstand des Tanks kontrolliert.

Der Trinkwassertank 4 ist als membranloser Niederdruckbehälter ausgebildet, von dem eine Steigleitung 10 über ein Keramikfilter 11 zu einem Trinkwasserspender 12 führt. Zusätzlich mündet in den Trinkwassertank 4 eine Druckleitung 13, die zur Luftbeaufschlagung des Tanks 4 an eine Pumpe 14 anschließt. Diese Pumpe 14 ist mit einem entsprechenden Antriebsteil in die Abwasserleitung 7 eingebunden und kann über das Abwasser dieser Abwasserleitung angetrieben werden, so daß zum Pumpenbetrieb keine Fremdenergie erforderlich ist. Der Antriebsteil kann in nicht weiter dargestellter Weise eine Kolben- oder Strömungsmaschine od. dgl. sein, durch die sich die kinetische Energie des Abwassers als Antriebsenergie für die Pumpe nutzen läßt. Ein Überdruckventil 15 sorgt für die Einhaltung eines nur geringen Überdruckes innerhalb des Tankes 4, so daß zwar eine Tankentleerung sichergestellt ist, der Gegendruck im Membranfilter 2 für die Durchführung der Umkehr-Osmose aber niedrig bleibt. Der Tank 4 läßt sich mit einem abnehmbaren Deckel 16 einfach verschließen und demnach auch gut reinigen, wodurch eine Verkeimung des Trinkwassers nicht zu befürchten ist.

In Fig. 2 ist ein etwas abgeändertes Ausführungsbeispiel eines Wasseraufbereitungsgerätes 1 dargestellt, wobei gleichbleibende Geräteteile auch mit gleichen Bezugszeichen versehen sind. Dem Membranfilter 2 können, wie angedeutet, bedarfsweise als Vorfilter 3 ein Aktivkohlefilter für chloriertes Wasser oder auch ein Keramikfilter 17 für unchloriertes Wasser vorgeordnet sein und die dem Membranfilter nachgeordnete abwasserbetriebene Pumpe 14 kann unmittelbar in die Reinwasserleitung 8 eingebunden werden. Die Reinwasserleitung 8 ist dann mit einem Luftansaugventil 18, das ein Bakterienfilter 19 aufweist, versehen, so daß die Pumpe sowohl das Reinwasser als auch Luft ansaugt und ein Wasser-Luftgemisch durch die Druckleitung 13 in den Trinkwassertank 4 pumpt, was hier zur Wasserfüllung und gleichzeitig zur Luftbeaufschlagung führt. Das direkte Absaugen des Reinwassers aus dem Membranfilter 2 gewährleistet dabei optimale Druckverhältnisse für die Umkehr-Osmose.

## Patentansprüche

1. Wasseraufbereitungsgerät (1) mit einem eingangsseitig über ein Vorfilter (3) an eine Wasserleitung (6) anschließbaren Membranfilter (2) zur Wasserbehandlung durch Umkehr-Osmose, welches Membranfilter (2) ausgangsseitig neben einer Abwasserleitung (7) eine Reinwasserleitung (8) aufweist, die in einen mit einem Trinkwasserspender (12) leitungsverbundenen Trinkwassertank (4) mündet, wobei ein membranloser, mit einer Einrichtung zur Luftbeaufschlagung ausgestatteter Behälter den Trinkwassertank (4) bildet, von dem eine zum Trinkwasserspender (12) führende Steigleitung (10) ausgeht, dadurch gekennzeichnet, daß die Luftbeaufschlagungseinrichtung aus einer mittels des Abwassers der Abwasserleitung (7) antreibbaren Pumpe (14) besteht, an die eine in den Behälter mündende Druckleitung (13) angeschlossen ist.

2. Wasseraufbereitunsgerät nach Anspruch 1, dadurch gekennzeichnet, daß die Pumpe (14) in die über ein Luftansaugventil führende Reinwasserleitung (8) eingebunden ist.

3. Wasseraufbereitungsgerät nach Anspruch 1, dadurch gekennzeichnet, daß die Druckleitung (13) im Bodenbereich des Trinkwassertanks (4) mündet.

4. Wasseraufbereitungsgerät nach Anspruch 1 oder 2, dadurch gekennzeichnet, daß der Trinwassertank (4) ein Überdruckventil (15) aufweist und die Druckleitung (8) innerhalb des Trinkwassertanks (4) mit einem Schwimmerventil (9) ausgestattet ist.

## Claims

1. A water treatment unit (1) comprising a membrane filter (2) adapted to be connected on the inlet side to a water pipe (6) via a preliminary filter (3), for water treatment by reverse osmosis, the membrane filter (2) having on the outlet side in addition to a waste water pipe (7) a clean water pipe (8) which leads into a drinking water tank connected by a pipe to a drinking water dispenser (12), the drinking water tank (4) being formed by a membrane-less container equipped with an air admission means, from which drinking water tank (4) a riser pipe (10) leads to the drinking water dispenser (12), characterised in that the air admission means consists of a pump (14) which is adapted to be driven by the waste water of the waste water pipe (7) and to which a pressure pipe (13) leading into the container is connected.

2. A water treatment unit according to claim 1, characterised in that the pump (14) is integrated in the pure water pipe (8) which extends through an air intake valve.

3. A water treatment unit according to claim 1, characterised in that the pressure pipe (13) leads into the bottom zone of the drinking water tank (4).

4. A water treatment unit according to claim 1 or 2, characterised in that the drinking water tank (4) comprises a relief valve (15) and the pressure pipe (8) is equipped with a float valve (9) inside the drinking water tank (4).

## Revendications

1. Groupe de traitement d'eau (1), avec un filtre membrane (2), susceptible d'être raccordé côté entrée, par l'intermédiaire d'un préfiltre (3), à une conduite d'eau (6) et destiné au traitement de l'eau par osmose inverse, ledit filtre membrane (2) présentant, outre une conduite d'eaux usées (7), une conduite d'eau épurée (8), débouchant dans un réservoir d'eau potable (4) relié par une conduite à un distributeur d'eau potable (12), un récipient sans membrane, équipé d'un dispositif d'aération, constituant le récipient d'eau potable (4), d'où part une conduite montante (10) menant au distributeur d'eau potable (12), caractérisé en ce que le dispositif d'aération est constitué d'une pompe (14), susceptible d'être entraînée aux moyens des eaux usées de la conduite d'eaux usées (7) et à laquelle est raccordée une conduite de refoulement (13) débouchant dans le récipient.

2. Groupe de traitement selon la revendication 1, caractérisé en ce que la pompe (14) est intégrée dans la conduite d'eau épurée (8) passant par une soupape d'aspiration d'air.

3. Groupe de traitement selon la revendication 1, caractérisé en ce que la conduite de refoulement (13) débouche dans la zone de fond du réservoir d'eau potable (4).

4. Groupe de traitement selon la revendication 1 ou 2, caractérisé en ce que le réservoir d'eau potable (4) présente une soupape de surpression (15) et la conduite de refoulement (8) est équipée d'une soupape à flotteur (9) montée à l'intérieur du réservoir d'eau potable (4).
